(19) Europäisches Patentamt
European Patent Office
Office européen des brevets

(11) Publication number: **0 513 469 A1**

# (12) EUROPEAN PATENT APPLICATION

(21) Application number: **91850152.9**

(22) Date of filing: **06.06.91**

(51) Int. Cl.5: **B01D 53/36**, B01J 23/00, B01J 23/76

(30) Priority: **13.05.91 CN 91212663**

(43) Date of publication of application: **19.11.92 Bulletin 92/47**

(84) Designated Contracting States: **AT BE CH DE DK ES FR GB GR IT LI LU NL SE**

(71) Applicant: **IMCS AB**
**Box 50032**
**S-951 05 Lulea(SE)**
Applicant: **RESERACH INSTITUTE OF GEOLOGY FOR MINETAL RESOURCES, CNNC**
**Sanlidian, P.O. Box 541 004**
**Guilin(CN)**

(72) Inventor: **Jin, Jianbo**
**Sanlidian**
**Guilin 541004(CN)**

(74) Representative: **Larsson, Karin et al**
**H. ALBIHNS PATENTBYRA AB P.O. Box 3137**
**S-103 62 Stockholm(SE)**

## (54) Catalyst containing rare earth and carrier.

(57) A mixed oxide approximately corresponding to the general formula:

$R_p(M_qZ_y)O_x$,

wherein R is at least one of La, Ce, Pr, Nd; M is at least one of Ca, Sr, Ba, Zr; Z is at least one of Zn, Co, Ni, Cu; p is 1-2; q is 0-0.4; y is 0.6-1.0 and x is 3-4, the values of p, q, y, and x, respectively, being approximate.

The use of the mixed oxide according to the invention as a catalytic material.

An aluminosilicate carrier for a catalytic material comprising 12-13% $Al_2O_3$, 66-67% $SiO_2$, 2-3% CaO, 1-2% MgO, 2-3% $K_2O$, 0.5-1.5% $Na_2O$ and 13-15% $H_2O$.

EP 0 513 469 A1

The present invention concerns a new catalytic material containing rare earth metals and a carrier for a catalytic material. The catalyst consisting of the catalytic material and the carrier can be used to purify polluted gases, especially car exhaust gases.

The most effective catalysts for purifying polluted gases usually contain one or more noble metals, especially platinum, palladium or rhodium (US patents 3 897 367, 4 110 258, JP patents 57-81832-1980, 57-87839-1980, CN patents 87105167.2, 88107136.6). There are no efficient car exhaust catalyst known not containing a noble metal.

The problem in using noble metals, e.g. platinum, is that they are expensive and also that the resources of such metals are limited. Another problem when using these known catalysts in car exhaust systems is that they cannot be used with leadcontaining gasoline as lead compounds are deposited on the noble metals and reduce the catalytic activity.

The known catalytic materials for car exhaust gases is usually applied on a carrier of pellets ($Al_2O_3$), an extruded ceramic body, honeycomb or monolite, of cordierite or a thin corrugated steel sheet. The catalytic material consists of a mixture of 1) a washcoat of gamma-$Al_2O_3$, 2) promoters comprising lanthanoides, particularly lanthanum or cerium, 3) base metal oxides of barium, manganese, copper, chromium, and 4) noble metals, particularly platinum, palladium, rhodium, ruthenium. The washcoat increases the surface area, the promotors stabilize the gamma-$Al_2O_3$ against transformation to alpha-$Al_2O_3$ at high temperatures, the base metal oxides provide oxygen occlusion and have some catalytic activity and the noble metals are the true catalytic material.

There is a continuing interest in developing less expensive catalytic materials not containing noble metals and also in developing car exhaust catalysts which can be used with lead containing gasoline.

An object of this invention is to provide a new catalytic material with these properties.

Another object of this invention is to provide a carrier for a catalytic material, particularly for the new catalytic material of the invention.

The present invention relates to a new catalytic material containing no noble metal. The catalytic material consists of a mixed oxide corresponding approximately to the general formula

$R_p(M_qZ_y)O_x$,

wherein R is at least one of La, Ce, Pr, Nd, preferably only one of these metals; M is at least one of Ca, Sr, Ba, Zr, preferably at least two of these metals; Z is at least one of Zn, Co, Ni, Cu, preferably at least two of these metals; p is 1-2; q is 0-0.4; y is 0.6-1.0 and x is 3-4, the values given for p, q, y, and x, respectively, being approximate. R may comprise small amounts of other rare earth (RE) metals.

It is most preferable to use two metals M and two metals Z.

This catalyst is preferably applied on a washcoat of gamma-$Al_2O_3$ and/or on an extruded honeycomb aluminosilicate carrier.

This invention also relates to a new aluminosilicate carrier containing 12-13 % $Al_2O_3$, 66-67 % $SiO_2$, 2-3 % CaO, 1-2 % MgO, 2-3 %$K_2O$, 0.5-1.5 % $Na_2O$ and 13-15 % $H_2O$, the amounts being given as weight percent.

The carrier of the invention is preferably in the form of a honeycomb with a diameter of between about 4 mm and about 10 mm, or in the form of spherical grains with a diameter of 3-8 mm. The carrier can be used as carrier for a catalytic material.

Particularly it can be used as carrier for the mixed oxide of the invention.

Preferable compositions for the catalytic material are

type R-1 $Ce_{1.2}((Sr_{0.1}+Ba_{0.1})\bullet(Cu_{0.5}+Zn_{0.5}))O_3$
type R-2 $Ce_{1.0}((Sr_{0.3}+Ba_{0.1})\bullet(Cu_{0.6}+Co_{0.01}))O_3$
type R-3 $Ce_{1.0}(Cu_{0.5}+Co_{0.5})O_3$.

In these compositions Ce may be replaced by lanthanum or a mixture of lanthanum, cerium, praseodymium and neodymium.

Type R-3 is most preferred as this catalytic material is easy to produce, without any environment pollution, and gives very good results. Type R-3 gives particularly good results combined with the carrier of the invention.

A preferred composition for the carrier is 12% $Al_2O_3$, 66% $SiO_2$, 2.2% CaO, 1.3% MgO, 2.9% $K_2O$, 1.3% $Na_2O$, 14.3% $H_2O$.

The catalyst of the invention can be used when purifying gases, both industrial gases and car exhaust gases.

The composition of the catalyst should be chosen according to the process in which it will be used. E.g. Sr stabilizes the catalyst at high temperatures. In an oxidative atmosphere Cu has a stabilizing effect at high temperatures and Co at low temperatures. In a reductive atmosphere Zr and Ba are preferred.

The catalytic material of the invention has high catalytic activity, is not sensitive to lead poisoning, is stable for long periods in both oxidative and reducing atmosphere at high temperatures. The catalytic material can be used to remove or purify carbon monoxide, hydrocarbons and nitrogen oxides from gases containing these compounds, particularly from car exhaust gases.

The catalyst of the invention consisting of carrier and catalytic material can be produced as shown on the following flow chart (using gamma-$Al_2O_3$ as carrier):

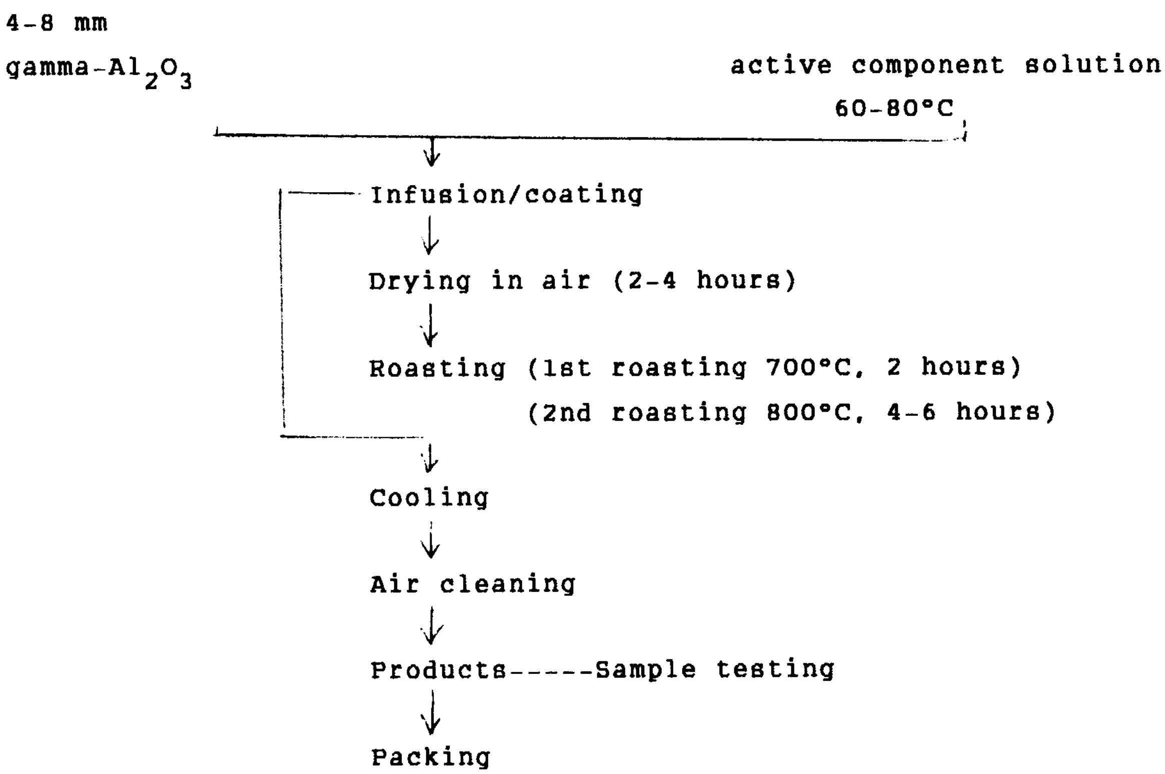


The following examples describe production of catalysts consisting of a catalytic material of the invention and a carrier consisting of gamma-$Al_2O_3$ or the aluminosilicate carrier of the invention.

Example 1: Type R-1, charge for 1 ton products: 800 kg of carrier and 200 kg of active metal oxide.

- A: 800 kg of the carrier;
- B: 372 kg of cerium nitrate (or lanthanum or mixed RE nitrate containing $CeO_2$ 50%, $La_2O_3$ 20-23%, $Pr_6O_{11}$ 5-7%, $Nd_2O_3$ 15-17%, other RE 3%);
- C: 190 kg of copper nitrate;
- D: 227 kg of zinc nitrate;
- E: 19 kg of barium nitrate;
- F: 24 kg of strontium nitrate;

Example 2: Type R-2.

- A: 800 kg of the carrier;
- B: 310 kg of cerium or lanthanum nitrate (or mixed RE nitrate containing $CeO_2$ 50%, $La_2O_3$ 20-23%, $Pr_6O_{11}$ 5-7%, $Nd_2O_3$ 15-17%, other RE 3%);
- C: 229 kg of copper nitrate;
- D: 74.2 kg of strontium nitrate;
- E: 19 kg of barium nitrate;
- F: 5 kg of cobalt nitrate;

The prepared solution of active compounds B-F is used to impregnate the carrier material, which is then dried in circulating air for 2-4 hours, and roasted in high-temperature furnace at 800 ° C for 4-6 hours.

Example 3: Type R-3.

A: 800 kg of aluminosilicate carrier powder (100-160 mesh)

B: 100 kg of $CeO_2$ (or $La_2O_3$, or a mixture containing $CeO_2$ 50%, $La_2O_3$ 20-30%, $Pr_6O_{11}$ 5-7%, $Nd_2O_3$ 15-17%, other NE 3%);

C: 50 kg of CuO;

D: 50 kg of $Co_2O_3$

After uniformly mixing the components, grains are formed at the diameter range of 3-8 mm, with roasting for 4-12 hours at a temperature of 300-400 ° C.

Technical indexes: "grains' pressurization intensity" of type R-1 and R-2 > 8 kg/grain: Type R-3: 5 kg/grain: if CO< 8% its purification rate > 90%, if HC < 8000 ppm the purification rate >80% and the purification rate of $NO_x$ >70% if CO accounts for 2-5%. Thermo-decompositional temperature of type R-1 and R-2 is 500-800 ° C, 2-6 h, and of type R-3 300-400 ° C, 4-12 h.

The catalyst may be used to transform carbon monoxide, CO, hydrocarbons, HC, and nitrogen oxides, $NO_x$, to carbon dioxide, water and nitrogen according to the following equations:

$$2HC + 6O_2 \longrightarrow \text{catalyst bed} \longrightarrow 2CO_2 + 2H_2O$$

$$2CO + O_2 \longrightarrow 400\text{-}600°C \longrightarrow 2CO_2$$

$$4NO + 4CO \longrightarrow \qquad \longrightarrow 2N_2 + 4CO_2$$

Usually the temperature of the exhaust fumes is about 100-300 ° C. At this temperature the catalytic activity is low. However, the catalytic oxidation of CO and HC is exothermic and raises the temperature of the catalyst bed to 400-700 ° C. Type R-3 may be used at lower temperatures.

The performance of the catalytic materials of the examples on gamma-aluminiumoxid pellets was tested. Three different types of motors were used:

1. Volvo 740 GL, B 230 A carburator.
2. Volvo 740 GLE, B 230 E fuel injection.
3 and 4. Volvo 740 GL, B 230 F fuel injection with lamda sond.

(Tests 1-3 with the catalytic material of the invention and test 4 with a conventional Volvo catalyst.)

The tests were performed at the Motor Laboratory at the University of Technology in Luleå, Sweden. The results given in the following tables 1-7 show that the new catalyst is an effective oxidation catalyst for cars (80-97% elimination of carbon monoxide and hydrocarbons at idling and a temperature of about 600 ° C in the catalyst). The tests were performed on spherical pellets. Application of the catalytic material on a carrier consisting of an extruded ceramic body or of a corrugated steel sheet would probably improve the results further. The results are of the same order as those obtained with the conventional Volvo catalyst.

On the enclosed Figures 1-12 the results of the tests are shown in the form of staple diagrams and graphs.

Table 1

| First Time | | | | Second Time | | | | Third Time | | | |
|---|---|---|---|---|---|---|---|---|---|---|---|
| temp. ℃ | HC ppm before | HC ppm after | rate % | temp. ℃ | HC ppm before | HC ppm after | rate % | temp. ℃ | HC ppm before | HC ppm after | rate % |
| — | — | — | — | 250 | 4538 | 4099 | 9.6 | 250 | 4464 | 4133 | 7.4 |
| 300 | 4377 | 1189 | 72.8 | 300 | 4700 | 1627 | 65.4 | 300 | 4538 | 1682 | 62.9 |
| 350 | 4333 | 892 | 79.4 | 350 | 4853 | 850 | 82.5 | 350 | 4921 | 1013 | 79.4 |
| 400 | 3910 | 409 | 89.5 | 400 | 4803 | 685 | 85.7 | 400 | 4863 | 825 | 83.0 |
| | | | | 450 | 4825 | 283 | 94.1 | 450 | 4763 | 337 | 92.9 |
| | | | | 550 | 4738 | 63 | 98.6 | 550 | 4630 | 89 | 98.1 |
| | | | | — | — | — | — | 650 | 4853 | 17 | 99.6 |
| | | | | 450 | 4742 | 471 | 90.1 | — | — | — | — |
| | | | | 400 | 4444 | 806 | 81.9 | 400 | 4630 | 819 | 82.3 |
| | | | | | | | | 350 | 4741 | 1100 | 76.8 |
| | | | | | | | | 400 | 4564 | 828 | 81.8 |
| | | | | | | | | | | | |
| | | | | | | | | | | | |
| | | | | | | | | | | | |
| | | | | | | | | | | | |

Table 2

| | A | B | C | D | E | F | G | H | I |
|---|---|---|---|---|---|---|---|---|---|
| 1 | | | | | | | | | |
| 2 | | | | results | HC | determing | results | CO | determing |
| 3 | Motortype in car | Temperature | Idling velocity | before | after | rate | before | after | rate |
| 4 | | (C) | (rpm) | (ppm) | (ppm) | (%) | (ppm) | (ppm) | (%) |
| 5 | | | | | | | | | |
| 6 | Nr 1 | | | | | | | | |
| 7 | **Volvo B230A** | 600-630 | 1000 | 518,7 | 40,6 | 92,2 | 25000 | 608 | 97,6 |
| 8 | **Carburator** | | | | | | | | |
| 9 | **(gasoline with lead)** | 650-665 | 1000 | 350,7 | 31,7 | 91 | 20000 | 638 | 96,8 |
| 10 | | | | | | | | | |
| 11 | | | | | | | | | |
| 12 | | | | | | | | | |
| 13 | Nr 2 | | | | | | | | |
| 14 | **Volvo B230E** | 634-641 | 700 | 345 | 46,1 | 86,6 | 2000 | 40,2 | 98 |
| 15 | **Fuel Injection** | | | | | | | | |
| 16 | **(gasoline with lead)** | | | | | | | | |
| 17 | | | | | | | | | |
| 18 | | | | | | | | | |
| 19 | | | | | | | | | |
| 20 | Nr 3 | | | | | | | | |
| 21 | **Volvo B230F 87** | 690-720 | 750 | 358,1 | 43,5 | 87,8 | >1000 | 22,7 | >97,7 |
| 22 | **Fuel Injection** | | | | | | | | |
| 23 | **(lamda sond)** | 680-715 | 750 | 308,1 | 23,6 | 92,3 | >1000 | 49,7 | >95,0 |
| 24 | **(lead free gasoline)** | | | | | | | | |
| 25 | | 620-660 | 750 | 245,6 | 41,1 | 83,3 | >1000 | 87,6 | >91,2 |

Table 3

| 1 | Type | Temp | HC before | HC after | HC rate | CO before | CO after | CO rate |
|---|---|---|---|---|---|---|---|---|
| 2 | Carb | 615,000 | 518,700 | 40,600 | 92,200 | 25000,000 | 608,000 | 97,600 |
| 3 | Carb | 650,000 | 350,700 | 31,700 | 91,000 | 20000,000 | 638,000 | 96,800 |
| 4 | Injec | 635,000 | 345,000 | 46,100 | 86,600 | 2000,000 | 40,200 | 98,000 |
| 5 | Lamda | 705,000 | 358,100 | 43,500 | 87,800 | 1000,000 | 22,700 | 97,700 |
| 6 | Lamda | 695,000 | 308,100 | 23,600 | 92,300 | 1000,000 | 49,700 | 95,000 |
| 7 | Lamda | 640,000 | 245,600 | 41,100 | 83,300 | 1000,000 | 87,600 | 91,200 |

Table 4

Carburator data

| | rpm | temp | HC before | HC after | rate | CO before | CO after | CO rate | NO before | NO after |
|---|---|---|---|---|---|---|---|---|---|---|
| 1 | | | | | | | | | | |
| 2 | 2000,0 | 574,0 | 827,8 | 535,0 | 35,4 | 42000,0 | 20000,0 | 52,4 | 362,4 | 10,3 |
| 3 | 2000,0 | 586,0 | 824,8 | 623,2 | 24,4 | 45000,0 | 25000,0 | 44,4 | 340,0 | 132,9 |
| 4 | 1500,0 | 571,0 | 100,4 | 37,6 | 62,5 | 15000,0 | 981,0 | 93,5 | 98,5 | 88,2 |
| 5 | 1500,0 | 515,0 | 86,2 | 32,3 | 62,5 | 10000,0 | 909,0 | 90,9 | 111,6 | 100,1 |
| 6 | 1500,0 | 488,0 | 87,4 | 34,8 | 60,1 | 10000,0 | 869,0 | 91,3 | 112,5 | 100,2 |
| 7 | 1000,0 | 615,0 | 518,7 | 40,6 | 92,2 | 25000,0 | 608,0 | 97,6 | 19,9 | 19,9 |
| 8 | 1000,0 | 656,0 | 350,7 | 31,7 | 91,0 | 20000,0 | 638,0 | 96,8 | 19,9 | 19,9 |

Table 5

volvo data

| 1 | rpm | temp | HC before | HC after | HC rate | CO before | CO after | CO rate | NO before | NO after | NO rate |
|---|---|---|---|---|---|---|---|---|---|---|---|
| 2 | 3500,0 | 560,0 | 250,7 | 42,1 | 83,2 | 2000,0 | 903,9 | 54,8 | 594,1 | 28,8 | 95,2 |
| 3 | 3500,0 | 590,0 | 218,5 | 38,9 | 82,2 | 2500,0 | 822,9 | 67,1 | 596,5 | 24,9 | 95,8 |
| 4 | 2000,0 | 590,0 | 323,4 | 33,4 | 89,7 | 3000,0 | 222,7 | 92,6 | 497,4 | 8,7 | 98,2 |
| 5 | 2000,0 | 525,0 | 318,0 | 22,0 | 93,1 | 3000,0 | 26,7 | 99,1 | 480,5 | 6,5 | 98,7 |
| 6 | 750,0 | 530,0 | 756,3 | 41,6 | 94,5 | 2000,0 | 2,9 | 99,8 | 4,5 | 0,8 | 82,2 |
| 7 | 750,0 | 350,0 | 805,4 | 53,2 | 93,4 | 1500,0 | 1,8 | 99,9 | 10,3 | 8,6 | 16,5 |

Table 6

lamda-rigm data

| | rpm | temp | HC before | HC after | HC rate | CO before | CO after | CO rate | NO before | NO after | NO rate |
|---|---|---|---|---|---|---|---|---|---|---|---|
| 1 | | | | | | | | | | | |
| 2 | 3500,0 | 665,0 | 211,4 | 61,5 | 70,9 | 1300,0 | 335,8 | 74,2 | 439,8 | 255,1 | 42,0 |
| 3 | 3500,0 | 590,0 | 193,8 | 82,7 | 57,4 | 1200,0 | 698,9 | 41,8 | 435,9 | 293,1 | 32,8 |
| 4 | 3500,0 | 560,0 | 195,6 | 82,4 | 57,9 | 1200,0 | 826,4 | 31,1 | 480,8 | 324,3 | 32,5 |
| 5 | 2000,0 | 680,0 | 304,8 | 81,3 | 73,3 | 1300,0 | 146,7 | 88,7 | 446,3 | 320,3 | 28,2 |
| 6 | 2000,0 | 620,0 | 286,1 | 116,0 | 59,5 | 1300,0 | 570,5 | 56,1 | 431,8 | 381,2 | 11,7 |
| 7 | 1500,0 | 670,0 | 318,5 | 98,1 | 69,2 | 1200,0 | 110,6 | 90,8 | 291,6 | 216,6 | 25,7 |
| 8 | 1500,0 | 630,0 | 282,1 | 79,2 | 71,9 | 1200,0 | 289,4 | 75,9 | 280,2 | 208,2 | 25,7 |
| 9 | 750,0 | 705,0 | 358,1 | 43,5 | 87,9 | 1000,0 | 22,7 | 97,7 | 25,9 | 14,4 | 44,4 |
| 10 | 750,0 | 700,0 | 308,2 | 23,6 | 92,3 | 1000,0 | 87,6 | 91,2 | 24,1 | 19,2 | 20,3 |
| 11 | 750,0 | 640,0 | 245,6 | 41,1 | 83,3 | 1000,0 | 87,6 | 91,2 | 12,1 | 4,9 | 59,5 |

Table 7

| test No. | temp °C | motor speed rpm | gear No. | speed km/hour | HC ppm | CO | $NO_x$ ppm | $CO_2$ % | |
|---|---|---|---|---|---|---|---|---|---|
| 1. | 630 | 3500 | 1 | 38 | 2700 | 4,5% | 179 | 9,2 | before |
| 2. | " | " | " | " | 2577 | 5,0% | 18 | 10,3 | after |
| 3. | " | " | " | " | 2900 | 7,0% | 155 | 8,8 | before |
| 4. | " | " | " | " | 2500 | 4,5% | 27 | 10,0 | after |
| 5. | 620 | 2000 | 3 | 60 | 1800 | 5,5% | | 10,0 | after |
| 6. | 626 | " | " | " | 2200 | 6,5% | | 8,0 | before |
| 7. | 614 | 1000 | N | 0 | 3400 | 3.0% | 3 | 11,0 | after |
| 8. | 610 | " | " | " | 7500 | 8,5% | 15 | 6,0 | before |
| Adjustment of carburator | | | | | | | | | |
| 9. | 630 | 1000 | N | 0 | 500 | 1,0% | | 10,6 | before |
| 10. | 660 | " | " | " | 27 | 120ppm | | 11,7 | after |
| 11. | 656 | " | " | " | 500 | 1,0% | | 10,4 | before |
| 12. | 248 | " | " | " | 700 | 0,9% | | 8,9 | before |
| 13. | 270 | " | " | " | 260 | 0,05% | | 9,6 | after |
| 14. | 320 | " | " | " | 110 | 490ppm | | 9,1 | after |
| 15. | 350 | " | " | " | 300 | 0,75% | | 7,9 | before |
| 16. | 379 | " | " | " | 110 | 450ppm | 42 | | after |
| 17. | 440 | " | " | " | 330 | 0,7% | 40 | | before |
| 18. | 436 | " | " | " | 150 | 750ppm | 40 | | after |

## Claims

1. A mixed oxide approximately corresponding to the general formula:

   $R_p(M_qZ_y)O_x$,

   wherein R is at least one of La, Ce, Pr, Nd; M is at least one of Ca, Sr, Ba, Zr; Z is at least one of Zn, Co, Ni, Cu; p is 1-2; q is 0-0.4; y is 0.6-1.0 and x is 3-4, the values given for p, q, y, and x, respectively, being approximate.

2. A mixed oxide according to claim 1, characterized in that R is cerium or lanthanum.

3. A mixed oxide according to claim 1, characterized in that R is a mixture of cerium, lanthanum, praseodymium, neodymium and a small percentage of other rare earth metals.

4. A mixed oxide according to claim 3, characterized in that R consists of a mixture which expressed in the corresponding oxides contains 50% $CeO_2$, 20-30%, preferably 20-23%, $La_2O_3$, 5-7% $Pr_6O_{11}$, 15-17% $Nd_2O_3$, other RE oxides 3%.

5. A mixed oxide according to any of claims 1-5, characterized in that M is at least two of Ca, Sr, Ba, Zr.

6. A mixed oxide according to any of claims 1-6, characterized in that Z is at least two of Zn, Co, Ni, Cu.

7. A mixed oxide according to claim 5, characterized in that M is Sr and Ba.

**8.** A mixed oxide according to claim 6, characterized in that Z is Cu and Zn or Cu and Co.

**9.** A mixed oxide according to claim 1, characterized in having the approximate formula:

$Ce_{1.2}((Sr_{0.1}+Ba_{0.1})(Cu_{0.5}+Zn_{0.5}))O_3$.

**10.** A mixed oxide according to claim 1, characterized in having the formula:

$Ce_{1.0}((Sr_{0.3}+Ba_{0.1})(Cu_{0.6}+Co_{0.01}))O_3$.

**11.** A mixed oxide according to claim 1, characterized in having the formula:

$Ce_{1.0}(Cu_{0.5}+Co_{0.5})O_3$.

**12.** A mixed oxide according to any of claims 1-11, characterized in that it is applied on a gamma-$Al_2O_3$ and/or aluminosilicate carrier.

**13.** The use of the mixed oxide according to any of claims 1-11 as a catalytic material.

**14.** The use according to claim 13, characterized in that the mixed oxide is used on a carrier consisting of gamma-$Al_2O_3$ and/or aluminosilicate, the amount of mixed oxide preferably being 10-30% by weight of the product.

**15.** The use according to claim 13 or 14, characterized in that the catalytic material is used to remove pollutions from air or exhaust gases.

**16.** The use according to claim 15, characterized in that the catalytic material is used to purify car exhaust gases.

**17.** An aluminosilicate carrier for a catalytic material comprising 12-13% $Al_2O_3$, 66-67% $SiO_2$, 2-3% CaO, 1-2% MgO, 2-3% $K_2O$, 0.5-1.5% $Na_2O$ and 13-15% $H_2O$.

**18.** A carrier according to claim 17, characterized in the composition 12% $Al_2O_3$, 66% $SiO_2$, 2.2% CaO, 1.3% MgO, 2.9% $K_2O$, 1.3% $Na_2O$, 14.3% $H_2O$.

**19.** A carrier according to claim 17 or 18, characterized in that it is in the shape of spherical pellets of a diameter of 3-8 mm or in the form of a honeycomb structure with a diameter of between about 4 mm and about 10 mm.

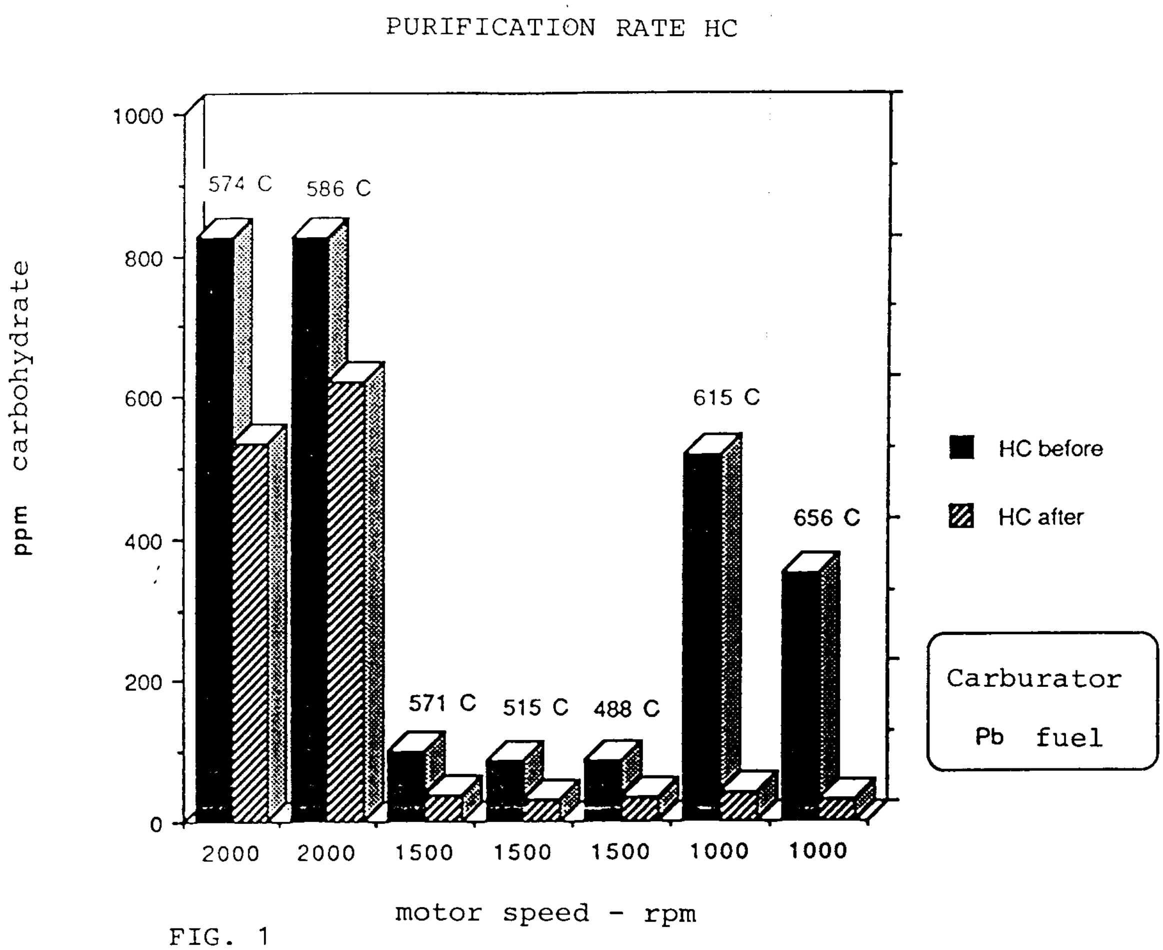
PURIFICATION RATE HC
ppm carbohydrate
1000
800
600
400
200
0
574 C
586 C
571 C
515 C
488 C
615 C
656 C
2000
2000
1500
1500
1500
1000
1000
motor speed - rpm
HC before
HC after
Carburator
Pb fuel

FIG. 1

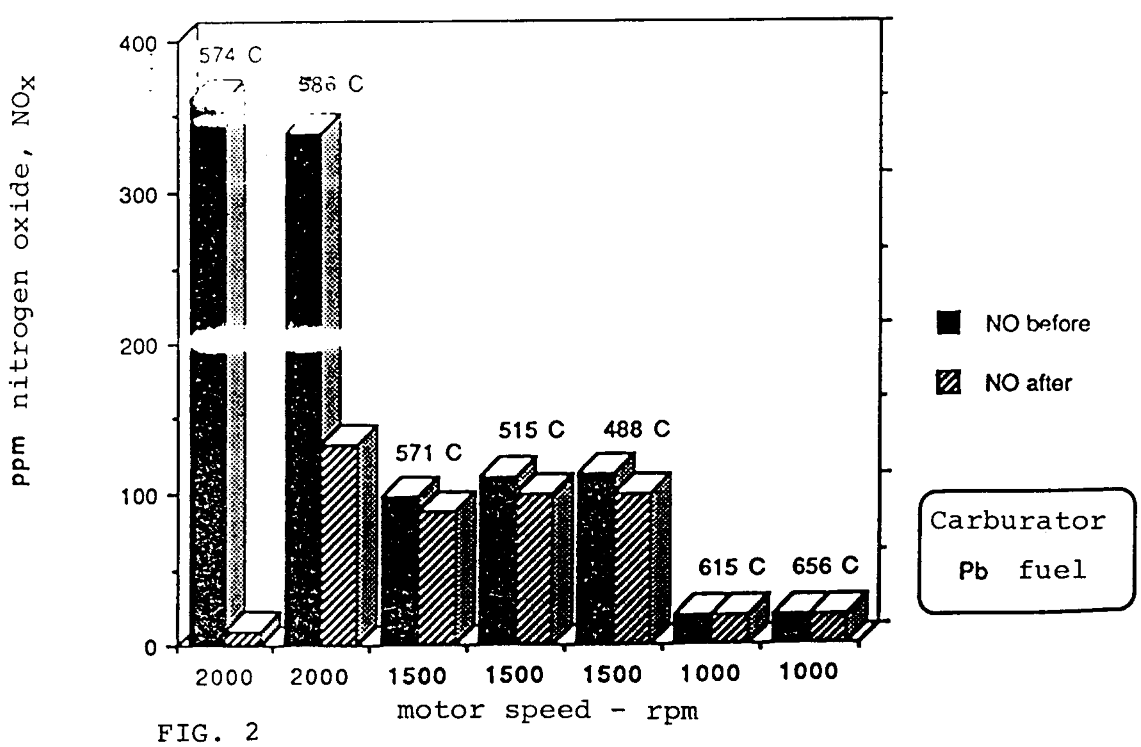
ppm nitrogen oxide, NOx
400
300
200
100
0
574 C
586 C
571 C
515 C
488 C
615 C
656 C
2000
2000
1500
1500
1500
1000
1000
motor speed - rpm
NO before
NO after
Carburator
Pb fuel

FIG. 2

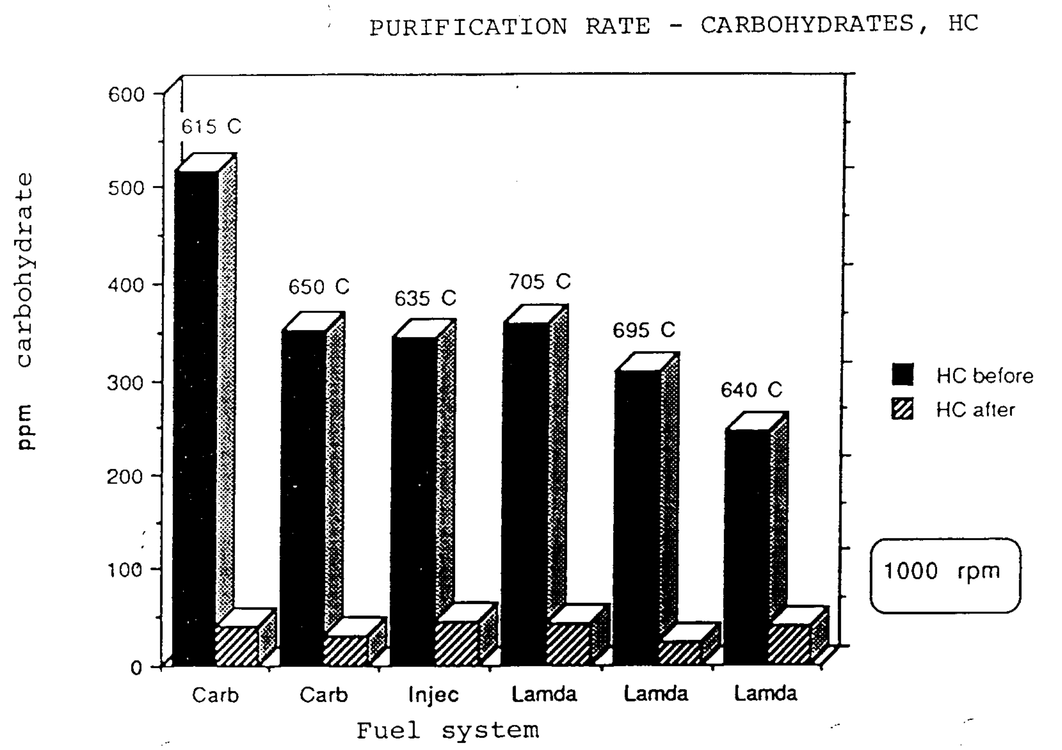
PURIFICATION RATE - CARBOHYDRATES, HC
ppm carbohydrate
600
500
400
300
200
100
0
615 C
650 C
635 C
705 C
695 C
640 C
HC before
HC after
1000 rpm
Carb
Carb
Injec
Lamda
Lamda
Lamda
Fuel system

FIG. 3

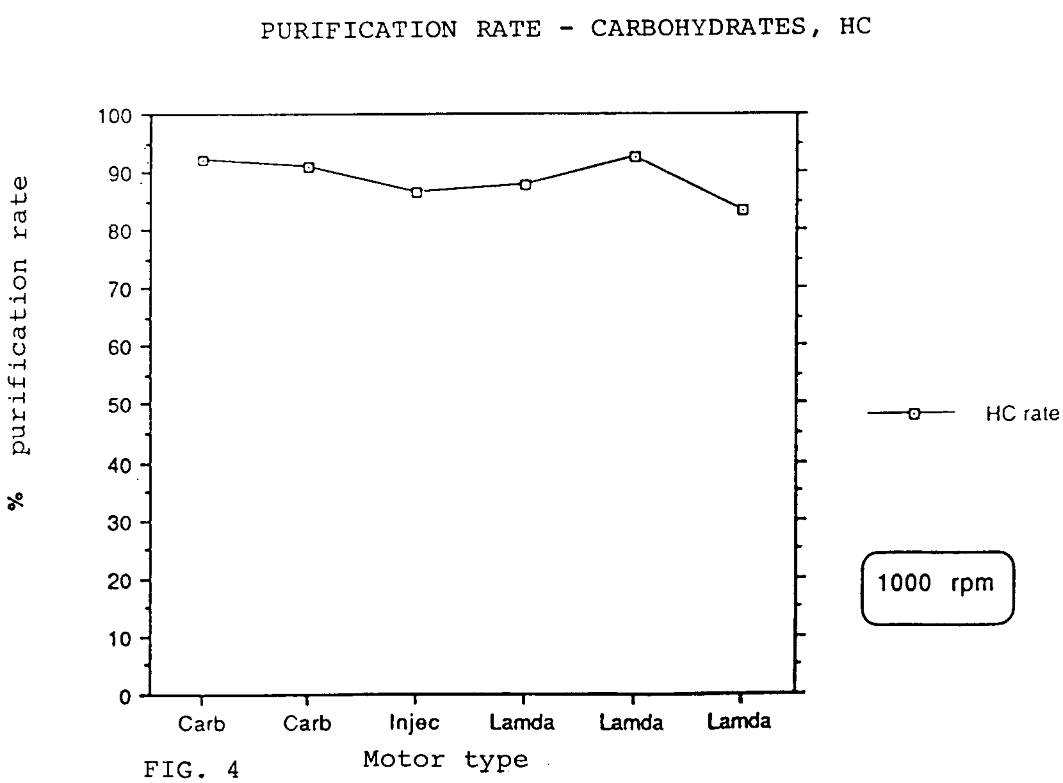
PURIFICATION RATE - CARBOHYDRATES, HC
% purification rate
100
90
80
70
60
50
40
30
20
10
0
HC rate
1000 rpm
Carb
Carb
Injec
Lamda
Lamda
Lamda
Motor type

FIG. 4

PURIFICATION RATE - CARBON MONOXIDE, CO

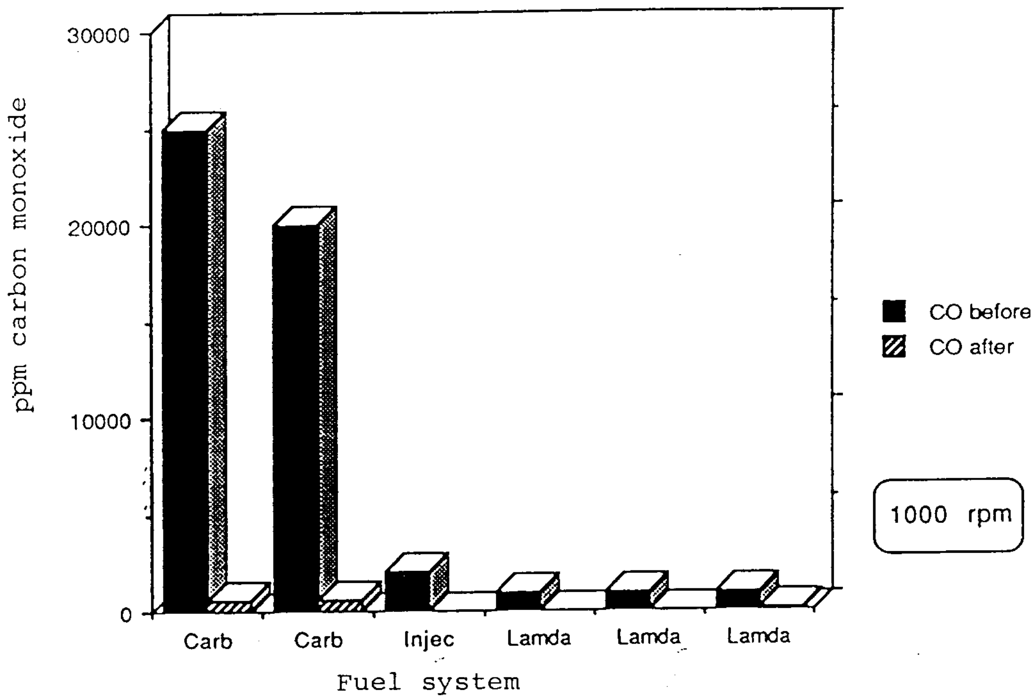


FIG. 5

PURIFICATION RATE - CARBON MONOXIDE, CO

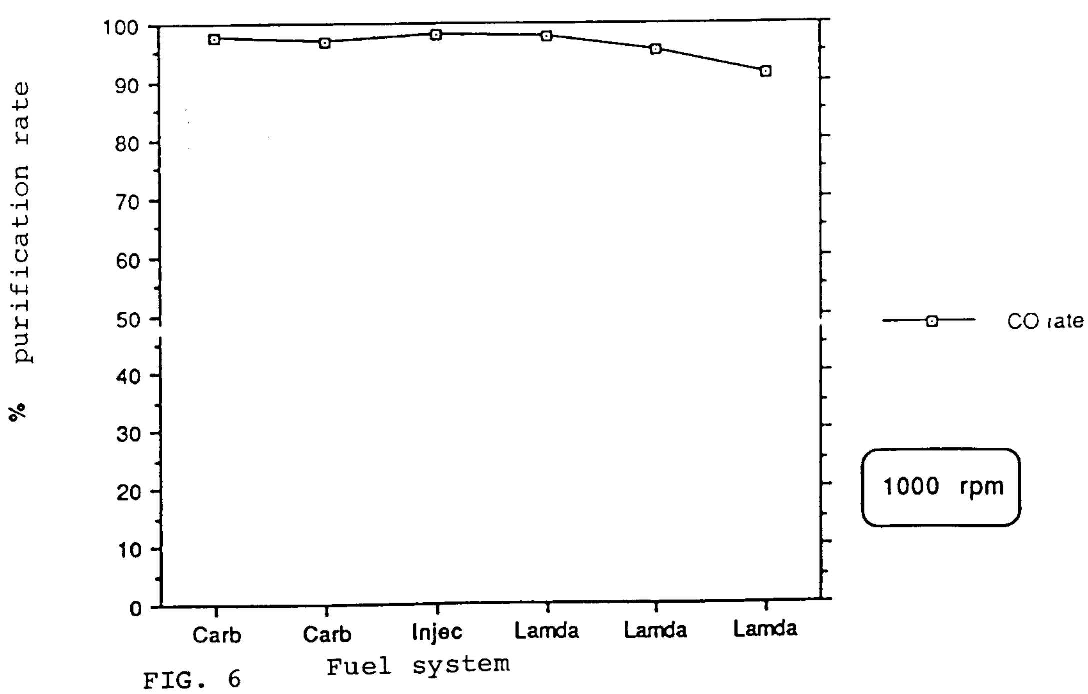


FIG. 6

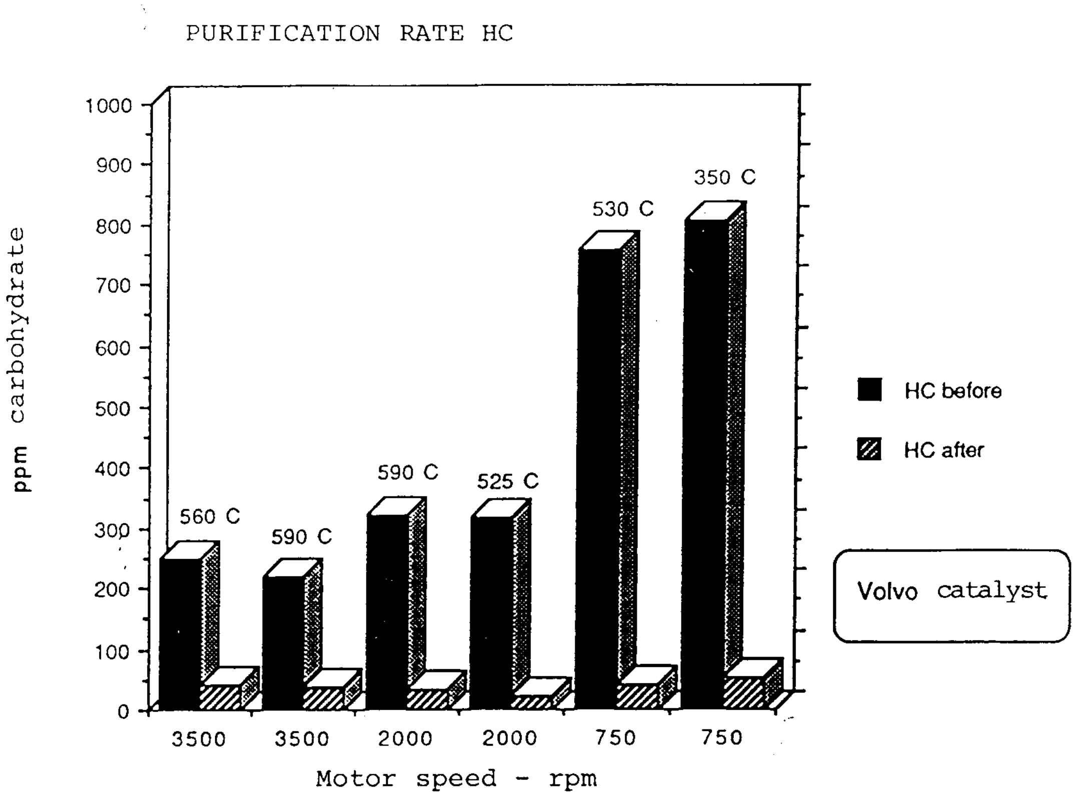
PURIFICATION RATE HC
ppm carbohydrate
1000
900
800
700
600
500
400
300
200
100
0
560 C
590 C
590 C
525 C
530 C
350 C
3500
3500
2000
2000
750
750
Motor speed - rpm
HC before
HC after
Volvo catalyst

FIG. 7

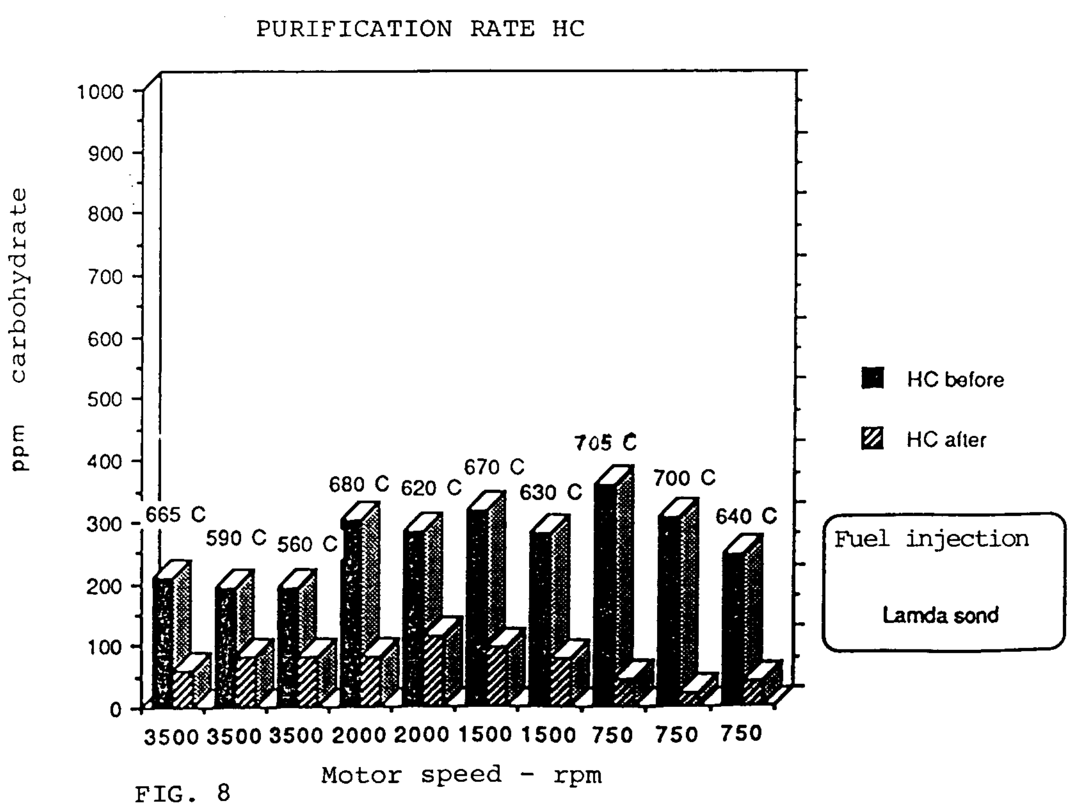
PURIFICATION RATE HC
ppm carbohydrate
1000
900
800
700
600
500
400
300
200
100
0
665 C
590 C
560 C
680 C
620 C
670 C
630 C
705 C
700 C
640 C
3500 3500 3500 2000 2000 1500 1500 750 750 750
Motor speed - rpm
HC before
HC after
Fuel injection
Lamda sond

FIG. 8

PURIFICATION RATE - CARBOHYDRATES, HC

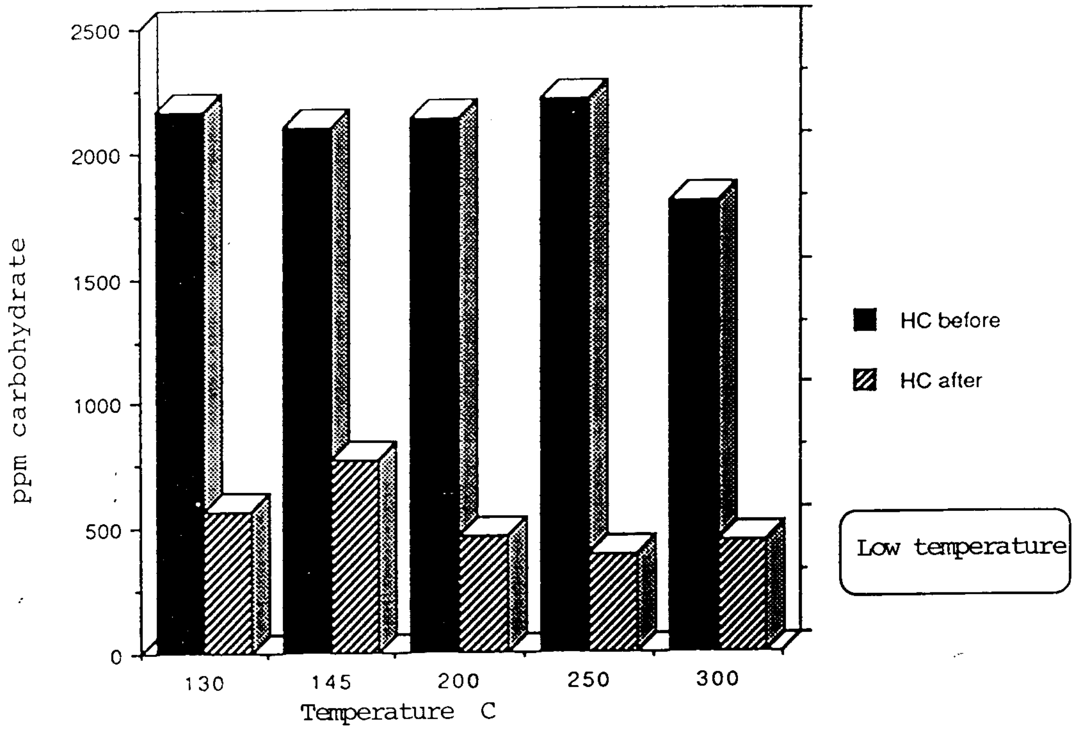


FIG. 9

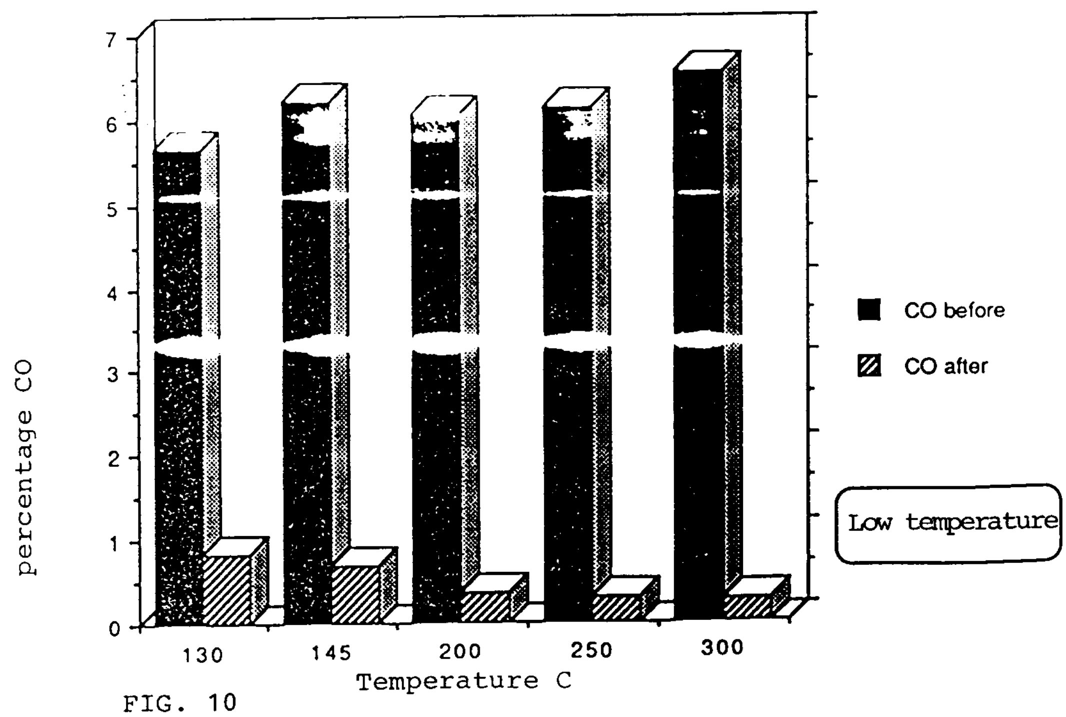


FIG. 10

PURIFICATION RATE - CO, HC

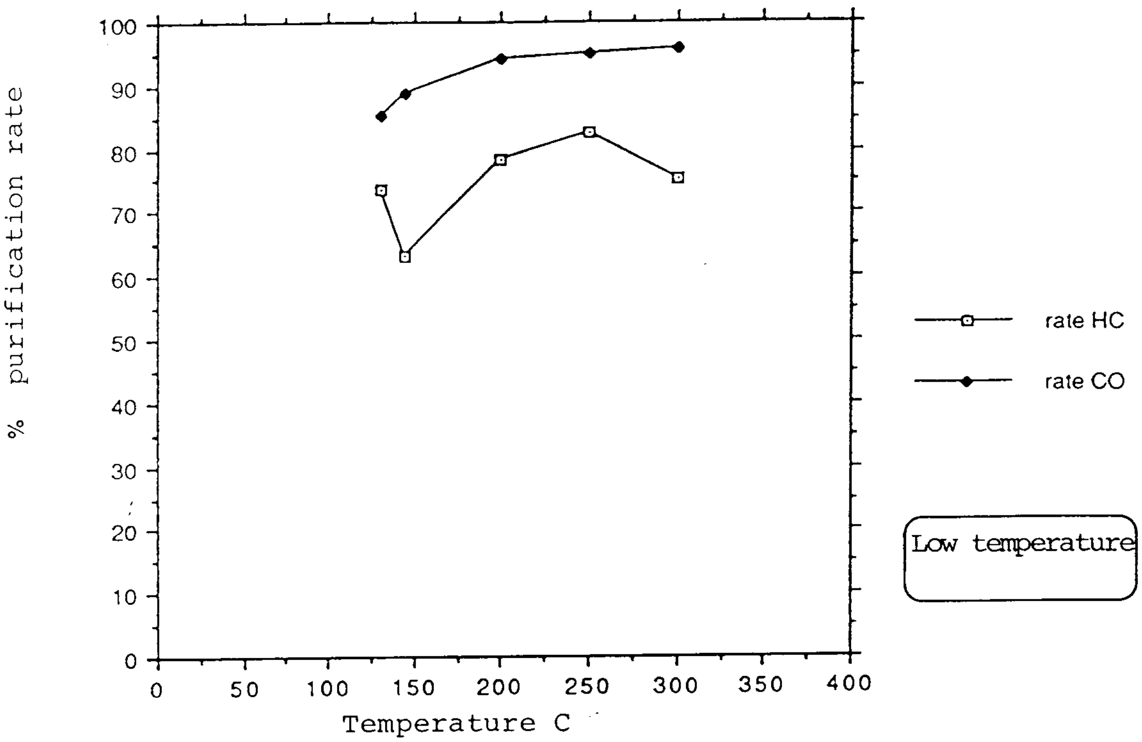


FIG. 11

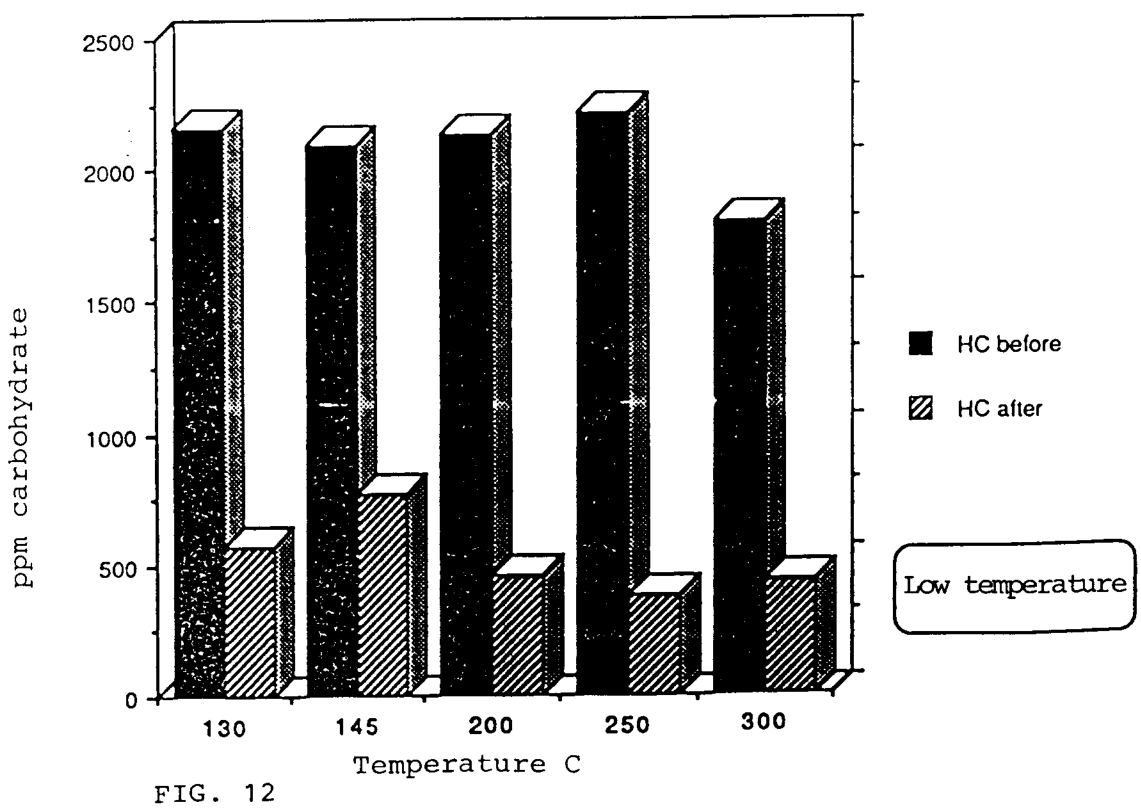


FIG. 12

European Patent Office

# EUROPEAN SEARCH REPORT

Application Number

EP 91 85 0152

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DATABASE WPIL, NO. 89-080046, DERWENT PUBLICATIONS LTD, LONDON, GB. & JP-A-01030649 (MATSUSHITA ELEC. ) 01-02-1989 *ABSTRACT* --- | 1-3,5-8, 12,13, 15,16,19 | B01D53/36<br>B01J23/00<br>B01J23/76 |
| X | US-A-3 926 854 (WHELAN ET AL.) * column 8, line 55 - line 61; claims 1-9 * --- | 1,2,5-7, 13,15,16 | |
| X | EP-A-0 318 808 (KATALISTIKS INTERNATIONAL) * claims 1,4,7-15 * --- | 1,2,5,6, 12,13 | |
| A | FR-A-2 200 049 (HITACHI) * claims 1-3 * --- | 12,13, 15,17,18 | |
| A | PATENT ABSTRACTS OF JAPAN vol. 11, no. 89 (C-411)(2536) 19 March 1987 & JP-A-61 245 843 ( MATSUSHITA ELECTRIC IND. CO. ) 1 November 1986 * abstract * ----- | 17,18 | |
| | | | **TECHNICAL FIELDS SEARCHED (Int. Cl.5 )** |
| | | | B01D<br>B01J |

The present search report has been drawn up for all claims

| Place of search | Date of completion of the search | Examiner |
|---|---|---|
| THE HAGUE | 23 APRIL 1992 | CUBAS ALCARAZ J.L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document